# EUROPÄISCHE PATENTSCHRIFT

(11) **EP 2 263 189 B1**
(45) Veröffentlichungstag und Bekanntmachung des Hinweises auf die Patenterteilung: **29.08.2012**
(21) Anmeldenummer: 09733026.0
(22) Anmeldetag: 12.03.2009
(51) Int. Cl.: G06F 21/24

(54) **VERFAHREN UND VORRICHTUNG ZUM UMSCHLÜSSELN BEI EINER VERSCHLÜSSELUNGSBASIERTEN ZUGRIFFSKONTROLLE AUF EINE DATENBANK**
METHOD AND DEVICE FOR TRANSCODING DURING AN ENCRYPTION-BASED ACCESS CHECK ON A DATABASE
PROCÉDÉ ET DISPOSITIF DE DÉCHIFFREMENT, DANS UN CONTRÔLE D'ACCÈS À UNE BANQUE DE DONNÉES FONDÉ SUR LE CHIFFREMENT

(30) Priorität: 16.04.2008 DE 102008019103
(43) Veröffentlichungstag der Anmeldung: 22.12.2010
(73) Patentinhaber: Siemens Aktiengesellschaft, 80333 München (DE)
(72) Erfinder: BUSSER, Jens-Uwe, 81739 München (DE); FRIES, Steffen, 85598 Baldham (DE); SCHATTLEITNER, Angela, 83104 Tuntenhausen (DE)
(86) Internationale Anmeldenummer: PCT/EP2009/052893
(87) Internationale Veröffentlichungsnummer: WO 2009/127479

(56) Entgegenhaltungen:
- DE-A1-102005 059 992
- US-A1- 2007 174 362
- US-A1- 2007 256 093
- US-B1- 7 095 854
- FISK D: "AN APPLICATION OF SOCIAL FILTERING TO MOVIE RECOMMENDATION" BT TECHNOLOGY JOURNAL, SPRINGER, DORDRECHT, NL, Bd. 14, Nr. 4, 1. Oktober 1996 (1996-10-01), Seiten 124-132, XP000635340 ISSN: 1358-3948

## Beschreibung

Verfahren und Vorrichtung zum Umschlüsseln bei einer verschlüsselungsbasierten Zugriffskontrolle auf eine Datenbank

Die Erfindung betrifft ein Verfahren und eine Vorrichtung zum Umschlüsseln bei einer verschlüsselungsbasierten Zugriffskontrolle einer Mehrzahl von Client-Vorrichtungen auf eine Datenbank.

Eine solche Datenbank kann in verschiedenen verschlüsselten Bereichen verschiedene Datensätze unterschiedlichen Inhalts bereitstellen. Beispiele für solche bereitgestellten Datensätze sind dynamische Daten, wie beispielsweise Streaming-Video-Daten oder Streaming-Audio-Daten. Diese können als kontinuierlicher Datenstrom, als sogenannter "Media-Stream", von der Datenbank an einen Client oder eine Client-Vorrichtung übertragen werden. Die Übertragung des kontinuierlichen Datenstroms erfolgt beispielsweise über eine Internetverbindung. Weitere Beispiele für nicht dynamische Daten wären auch Text oder Bilddateien.

Dabei kann einer bestimmten Gruppe von Clients oder Client-Vorrichtungen der Zugriff auf einen oder mehreren der verschlüsselten Bereiche erlaubt und folglich ermöglicht werden.

Die Notwendigkeit unterschiedlicher Zugangserlaubnisse für verschiedene Gruppen der Client-Vorrichtungen, sogenannte unterschiedliche Zugangs-Level, ergibt sich beispielsweise aus gesetzlichen Anforderungen, die vorschreiben, dass über das Internet bereitgestellte Daten zu klassifizieren sind, insbesondere um zu unterbinden, dass nicht berechtigte Personen Zugang zu diesen Daten haben. Ein Beispiel hierfür ist die bekannte Klassifizierung von Video-Daten oder Videofilmen in FSK12, FSK16 oder FSK18 und dergleichen.

Die Anforderung der Klassifizierung kann sich für den Service-Provider der Datensätze auch daraus ergeben, dass er differenzierte Inhalte für seine unterschiedlichen Kunden oder Kundenkreise bereitstellen möchte oder bereitzustellen hat.

Herkömmlicherweise werden die zu filternden oder zu klassifizierenden Datensätze auf der Server-Seite vor ihrer Übertragung offline gefiltert oder klassifiziert. Das bedeutet nachteiligerweise, dass der gesamte Inhalt der Daten gefiltert oder klassifiziert werden muss, bevor er für eine Übertragung bereitgestellt werden kann, um festzustellen, für welchen Kundenkreis bzw. für welche Clients einer bestimmten Berechtigung, zum Beispiel FSK16 oder FSK18, bestimmte Datensätze freigeschaltet sein sollen oder können.

Zur Zugriffskontrolle für die unterschiedlichen Client-Vorrichtungen oder Gruppen der Client-Vorrichtungen existiert herkömmlicherweise eine zentrale Instanz, beispielsweise eine Applikation auf einen Server der Datenbank, welche die Filterung oder Klassifizierung der Datensätze durchführt. US 7095854 B1 ist ein Beispiel für ein solches System

Nachteiligerweise ist die Zugriffskontrolle durch die zentrale Instanz statisch, d. h. der Datensatz wird einmal vorab klassifiziert und behält seine Klassifizierung innerhalb der Datenbank im Weiteren bei.

Demnach ist es eine Aufgabe der vorliegenden Erfindung, eine dynamische, verschlüsselungsbasierte Zugriffskontrolle auf eine Datenbank zu schaffen.

Eine weitere Aufgabe ist es, eine dynamische und kostengünstige, verschlüsselungsbasierte Zugriffskontrolle auf eine Datenbank bereitzustellen.

Erfindungsgemäß wird zumindest eine der oben gestellten Aufgaben durch ein Verfahren mit den Merkmalen des Patentanspruchs 1 und/oder durch eine Vorrichtung mit den Merkmalen des Patentanspruchs 19 gelöst.

Demgemäß wird ein Verfahren zum Umschlüsseln bei einer verschlüsselungsbasierten Zugriffskontrolle zumindest einer Client-Vorrichtung auf eine Datenbank vorgeschlagen, welche zumindest in einem verschlüsselten Bereich zumindest einen Datensatz bereitstellt, wobei das Verfahren folgende Schritte umfasst:
- Vorzugsweise Verschlüsseln eines Datensatzes bei der ersten Bereitstellung und Zuordnen eines bestimmten Zugangs-Levels der jeweiligen Client-Vorrichtung und Bereitstellen zumindest eines entsprechenden ersten Gruppenschlüssels, der die Daten in diesem Zugangs-Level verschlüsselt. Der Gruppenschlüssel wird der Client-Vorrichtung in Abhängigkeit von zumindest einem Anmeldeparameter zur Verfügung gestellt, wobei der Client-Vorrichtung in Abhängigkeit des zugeordneten Zugangs-Levels der Zugang zu einem mit dem ersten Gruppenschlüssel verschlüsselten, ersten Bereich und allen dem ersten Bereich untergeordneten Bereichen der Datenbank ermöglicht ist.
- Klassifizieren des jeweiligen Datensatzes des jeweiligen Bereiches durch zumindest eine der Client-Vorrichtungen, denen zu diesem jeweiligen Bereich der Zugang ermöglicht ist, zur Bereitstellung eines Klassifizierungs-Resultates; und
- Umschlüsseln des jeweiligen Datensatzes und/oder eines Datensatz-Schlüssels für den jeweiligen Datensatz in Abhängigkeit des jeweiligen Klassifizierungs-Resultates.

Ferner wird eine Vorrichtung zum Umschlüsseln bei einer verschlüsselungsbasierten Zugriffskontrolle zumindest einer Client-Vorrichtung auf eine Datenbank vorgeschlagen, welche in zumindest einem verschlüsselten Bereich zumindest einen Datensatz bereitstellt, wobei die Vorrichtung aufweist:
- ein erstes Mittel zum Zuordnen eines bestimmten Zugangs-Levels der jeweiligen Client-Vorrichtung und zum Bereitstellen zumindest eines entsprechenden ersten Gruppenschlüssels der Client-Vorrichtung in Abhängigkeit von zumindest einem Anmeldeparameter, wobei der Client-Vorrichtung in Abhängigkeit des zugeordneten Zugangs-Levels der Zugang zu einem mit dem ersten Gruppenschlüssel verschlüsselten, ersten Bereich und allen dem ersten Bereich untergeordneten Bereichen der Datenbank ermöglicht ist;
- ein zweites Mittel zum Bereitstellen eines Klassifizierungs-Resultates in Abhängigkeit einer Klassifizierung des jeweiligen Datensatzes des jeweiligen Bereiches durch zumindest eine der Client-Vorrichtungen, denen zu diesem jeweiligen Bereich der Zugang ermöglicht ist; und
- ein drittes Mittel zum Umschlüsseln des jeweiligen Datensatzes und/oder eines Datensatz-Schlüssels für den jeweiligen Datensatz in Abhängigkeit des jeweiligen Klassifizierungs-Resultates.

Ein wesentlicher Aspekt der vorliegenden Erfindung liegt in der Kombination der Klassifizierung oder des Ratings der Datensätze durch die Nutzer, Clients oder Client-Vorrichtungen und der Umschlüsselung der Datensätze oder ihrer DatensatzSchlüssel. Dadurch kann die verschlüsselungsbasierte Zugriffskontrolle auf die Datenbank in Abhängigkeit der durch die Client-Vorrichtungen durchgeführten Klassifizierung erfolgen, welche nicht auf einen bestimmten Zeitpunkt oder einen bestimmten Zeitrahmen beschränkt ist. Somit ist die erfindungsgemäße verschlüsselungsbasierte Zugriffskontrolle dynamisch. Dadurch, dass die Klassifizierung durch die Client-Vorrichtungen durchgeführt wird, ist diese auch dezentralisiert und unabhängig von einer zentralen Instanz zur Klassifizierung. Dadurch wird auch ferner die Wahrscheinlichkeit einer unbeabsichtigten Fehlklassifikation gemäß dem Standard einer bestimmten Gruppe von Nutzern oder der Gesellschaft der Nutzer minimiert.

Weiter ist die verschlüsselungsbasierte Zugriffskontrolle gemäß der vorliegenden Erfindung sicherer, weil ein Angreifer oder Attacker eine Vielzahl von Personen oder Clients nachbilden müsste, um eine Fehlklassifikation zu erreichen.

Des Weiteren ist die erfindungsgemäße verschlüsselungsbasierte Zugriffskontrolle auch kostengünstig, weil die Last für die Klassifizierung auf eine Mehrzahl von Client-Vorrichtungen aufgeteilt werden kann.

Ein weiterer Vorteil der vorliegenden Erfindung liegt darin, dass durch die dezentralisierte Klassifizierung eine demokratischere Zugriffskontrolle erreicht werden kann.

Ferner wird auch die Möglichkeit einer Zensur minimiert, weil viele verschiedene Clients oder Client-Vorrichtungen zusammen über einen bestimmten Inhalt oder Datensatz entscheiden können, insbesondere welchem der verschlüsselten Bereiche der Datenbank er durch eine Umschlüsselung zugeordnet werden soll. Auch das Führen einer schwarzen Liste durch eine der Datenbank vorgeschalteten Instanz ist erfindungsgemäß nicht mehr notwendig.

Umschlüsselung bedeutet hierbei eine Entschlüsselung eines verschlüsselten Datensatzes oder eines Datensatzschlüssels zu dem verschlüsselten Datensatz und eine Neuverschlüsselung des jeweiligen mit einem neuen, anderen Verschlüsselungsschlüssel. Das Ergebnis der Umschlüsselung ist, dass der umgeschlüsselte Datensatz bzw. der umgeschlüsselte Datensatzschlüssel nur noch mittels des neuen Verschlüsselungsschlüssels zugänglich ist.

Die Datenbank kann entweder als klassische Client-Server-Lösung existieren oder auch dezentral, z.B. als Peer-to-Peer-Netzwerk, aufgebaut sein. Gerade in verteilten Datenbanken wie Peer-to-Peer Netzwerken, kann es sein, dass die Einrichtung einer zentralen Filter- oder Klassifizierungsvorrichtung nicht möglich ist. Insbesondere für diesen Fall kann die Erfindung eingesetzt werden.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Ausgestaltung der Erfindung speichert der jeweilige verschlüsselte Bereich zumindest einen für diesen Bereich klassifizierten Datensatz und/oder zumindest einen Datensatzschlüssel zu dem jeweiligen zumindest einen für diesen Bereich klassifizierten Datensatz.

Gemäß einer weiteren bevorzugten Ausgestaltung speichert der jeweilige verschlüsselte Bereich die Datensatzschlüssel zu dem für diesen Bereich klassifizierten Datensätze und die Datensatzschlüssel zu den für die diesem Bereich untergeordneten Bereiche klassifizierten Datensätze.

Gemäß einer bevorzugten Weiterbildung der Erfindung wird die Datenbank in eine Mehrzahl von Bereichen horizontal und/oder vertikal hierarchisch geordnet, wobei der Client-Vorrichtung in Abhängigkeit des zugeordneten Zugangs-Levels der Zugang zu dem ersten Bereich und allen dem ersten Bereich vertikal zugeordneten und horizontal untergeordneten Bereichen ermöglicht ist.

Gemäß einer weiteren bevorzugten Ausgestaltung werden mittels des bereitgestellten Klassifizierungs-Resultates der Bereich, dem der klassifizierte Datensatz zuzuordnen ist, und der entsprechende Gruppenschlüssel bestimmt, mittels dem der jeweilige Datensatz und/oder der Datensatzschlüssel des jeweiligen Datensatzes umgeschlüsselt wird.

Gemäß einer weiteren bevorzugten Ausgestaltung werden der Client-Vorrichtung neben dem ersten Gruppenschlüssel für den ersten Bereich alle Gruppenschlüssel der dem ersten Bereich untergeordneten Bereiche bereitgestellt.

Gemäß einer weiteren bevorzugten Ausgestaltung speichert der erste Bereich alle Gruppenschlüssel der dem ersten Bereich untergeordneten Bereiche.

Gemäß einer weiteren bevorzugten Ausgestaltung werden/wird der jeweilige Datensatz und/oder der Datensatzschlüssel zu dem jeweiligen Datensatz mittels eines durch das Klassifizierungs-Resultat bestimmten Gruppenschlüssels umgeschlüsselt.

Gemäß einer weiteren bevorzugten Ausgestaltung umfasst der zumindest eine Anmeldeparameter ein Alter des Nutzers der Client-Vorrichtung, seinen Namen, seinen von einem Betreiber der Datenbank zugewiesenen Status und/oder seine Stellung innerhalb einer die Datenbank betreibenden oder unterhaltenden Organisation. Die Organisation kann beispielsweise ein Unternehmen sein.

Gemäß einer weiteren bevorzugten Weiterbildung werden verschiedene Bereiche einer gemeinsamen horizontalen Ebene der Datenbank einem identischen Zugangs-Level zugewiesen. Zusätzlich oder alternativ können verschiedene Bereiche einer gemeinsamen vertikalen Ebene der Datenbank einem identischen Themengebiet zugeordnet werden.

Gemäß einer weiteren bevorzugten Ausgestaltung wird einem jeweiligen Datensatz ein bestimmtes Zugangs-Level und damit ein bestimmter Bereich zugeordnet, wobei den Client-Vorrichtungen, denen zu diesem jeweiligen Bereich der Zugang ermöglicht ist, eine Auswahl von Zugangs-Leveln für das Klassifizieren bereitgestellt wird.

Gemäß einer weiteren bevorzugten Weiterbildung wird der jeweiligen Client-Vorrichtung ein Mittel bereitgestellt, mittels dem diese dazu geeignet ist, in Abhängigkeit eines der jeweiligen Client-Vorrichtung zugewiesenen Vertrauens-Levels eine vorbestimmte Anzahl von Stimmen für die von der Client-Vorrichtung getroffene Auswahl der bereitgestellten Zugangs-Level abzugeben.

Gemäß einer weiteren bevorzugten Ausgestaltung wird für jede Auswahl der Zugangs-Level ein Schwellwert vorbestimmt, wobei der jeweilige Datensatz mit dem Zugangs-Level klassifiziert wird, für den die durch die Client-Vorrichtungen abgegebenen Stimmen den vorbestimmten Schwellwert erreichen.

Gemäß einer weiteren bevorzugten Ausgestaltung wird die Anzahl der Stimmen der jeweiligen Client-Vorrichtungen in Abhängigkeit ihres jeweiligen Zugangs-Levels zugeordnet.

Gemäß einer weiteren bevorzugten Ausgestaltung wird Anzahl der Stimmen der jeweiligen Client-Vorrichtung in Abhängigkeit ihres vorausgegangen Abstimmungsverhaltens zugeordnet.

Gemäß einer weiteren bevorzugten Ausgestaltung werden die Client-Vorrichtungen, denen der höchste Zugangs-Level zugeordnet ist, mit einem Mittel ausgestattet, mittels dem ein für die Auswahl bereitgestellter Zugangs-Level blockierbar ist.

Gemäß einer weiteren bevorzugten Ausgestaltung weist der Datensatz dynamische Daten auf, welche dazu geeignet sind, als kontinuierlicher Datenstrom von der Datenbank zu der jeweiligen Client-Vorrichtung übertragen zu werden.

Gemäß einer weiteren bevorzugten Ausgestaltung kann der Datensatz bei der ersten Bereitstellung im niedrigsten Zugangs-Level auch unverschlüsselt bleiben.

Weiter wird ein Computerprogramm-Produkt vorgeschlagen, welches auf einer programmgesteuerten Einrichtung die Durchführung eines wie oben beschriebenen Verfahrens gemäß der Erfindung veranlasst.

Ein Computerprogramm-Produkt wie ein Computerprogramm-Mittel kann beispielsweise als Speichermedium, wie Speicherkarte, USB-Stick, Floppy, CD-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Die Erfindung wird nachfolgend anhand der, in den thematischen Figuren angegebenen Ausführungsbeispielen, näher erläutert. Es zeigen:
- Figur 1: ein schematisches Ablaufdiagramm eines Ausführungsbeispiels des erfindungsgemäßen Verfahrens;
- Figur 2: ein schematisches Blockschaltbild eines ersten Ausführungsbeispiels einer Datenbank mit verschiedenen verschlüsselten Bereichen;
- Figur 3: ein schematisches Blockschaltbild eines zweiten Ausführungsbeispiels einer Datenbank mit verschiedenen verschlüsselten Bereichen;
- Figur 4: ein schematisches Blockschaltbild eines dritten Ausführungsbeispiels einer Datenbank mit verschiedenen verschlüsselten Bereichen;
- Figur 5: ein schematisches Blockschaltbild eines vierten Ausführungsbeispiels einer Datenbank mit verschiedenen verschlüsselten Bereichen;
- Figur 6: ein schematisches Blockschaltbild eines fünften Ausführungsbeispiels einer Datenbank mit verschiedenen verschlüsselten Bereichen;
- Figur 7: ein schematisches Blockschaltbild eines sechsten Ausführungsbeispiels einer Datenbank mit verschiedenen verschlüsselten Bereichen;
- Figur 8: ein schematisches Blockschaltbild eines Ausführungsbeispiels einer Auswahl an Zugangs-Level für eine klassifizierende Client-Vorrichtung; und
- Figur 9: ein schematisches Blockschaltbild eines Ausführungsbeispiels der erfindungsgemäßen Vorrichtung.

In allen Figuren sind gleiche bzw. funktionsgleiche Mittel und Einrichtungen - sofern nichts anderes angegeben ist - mit denselben Bezugszeichen versehen.

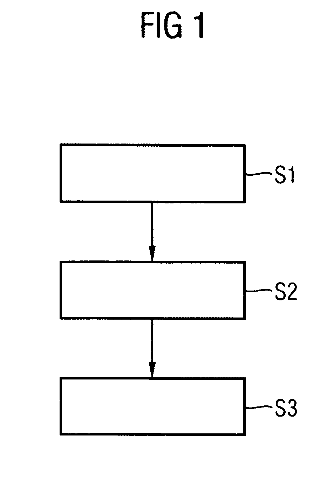

Figur 1 zeigt ein schematisches Ablaufdiagramm eines Ausführungsbeispiels des erfindungsgemäßen Verfahrens zum Umschlüsseln bei einer verschlüsselungsbasierten Zugriffskontrolle zumindest einer Client-Vorrichtung 20 auf eine Datenbank DB. Die Datenbank DB stellt zumindest in einem verschlüsselten Bereich B1, B2 zumindest einen Datensatz D1-D4 bereit.

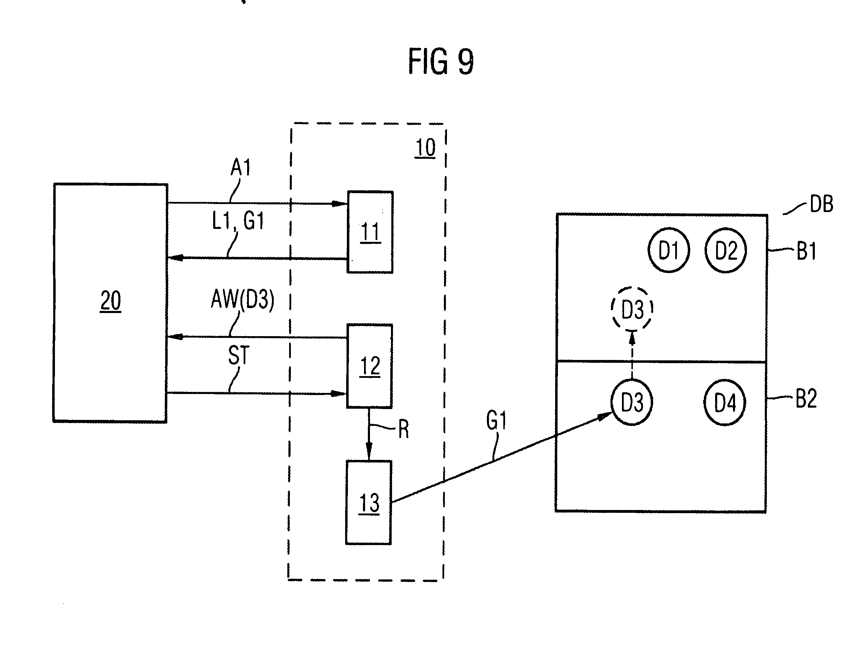

Nachfolgend wird das erfindungsgemäße Verfahren anhand eines Blockschaltbildes in Figur 1 mit Bezug auf das Blockschaltbild in Figur 9 erläutert. Das erfindungsgemäße Verfahren gemäß Figur 1 weist die Verfahrensschritte S1-S3 auf:

### Verfahrensschritt S1:

In Abhängigkeit von zumindest einem Anmeldeparameter A1 oder einem Nutzer-Profil mit einer Mehrzahl von Anmeldeparametern A1 wird der jeweiligen Client-Vorrichtung 20 ein bestimmter Zugangs-Level L1, L2 zugeordnet. Weiter wird der Client-Vorrichtung 20 ein entsprechender erster Gruppenschlüssel G1 zugeordnet. Der Client-Vorrichtung 20 ist in Abhängigkeit des zugeordneten Zugangs-Levels L1 der Zugang zu einem mit dem ersten Gruppenschlüssel G1 verschlüsselten, ersten Bereich B1 und allen diesem ersten Bereich B1 untergeordneten Bereichen. B2, B3 der Datenbank DB ermöglicht.

Der zumindest eine Anmeldeparameter A1 umfasst beispielsweise ein Alter des Nutzers der Client-Vorrichtung 20, seinen Namen, seinen von einem Betreiber der Datenbank DB zugewiesenen Status und/oder seine Stellung innerhalb einer die Datenbank DB betreibenden oder unterhaltenden Organisation. Insbesondere kann auch ein Nutzer-Profil bestehend aus einer Mehrzahl von Anmeldeparametern A1 verwendet werden.

### Verfahrensschritt S2:

Zur Bereitstellung eines Klassifizierungsresultates R wird der jeweilige Datensatz D1-D4 des jeweiligen Bereiches B1, B2 durch zumindest eine der Client-Vorrichtungen 20 klassifiziert, denen zu diesem jeweiligen Bereich B1, B2 der Zugang ermöglicht ist.

### Verfahrensschritt S3:

In Abhängigkeit des jeweiligen Klassifizierungsresultates R wird der jeweilige Datensatz D1-D4 und/oder ein Datensatzschlüssel K1-K4 für den jeweiligen Datensatz D1-D4 umgeschlüsselt.

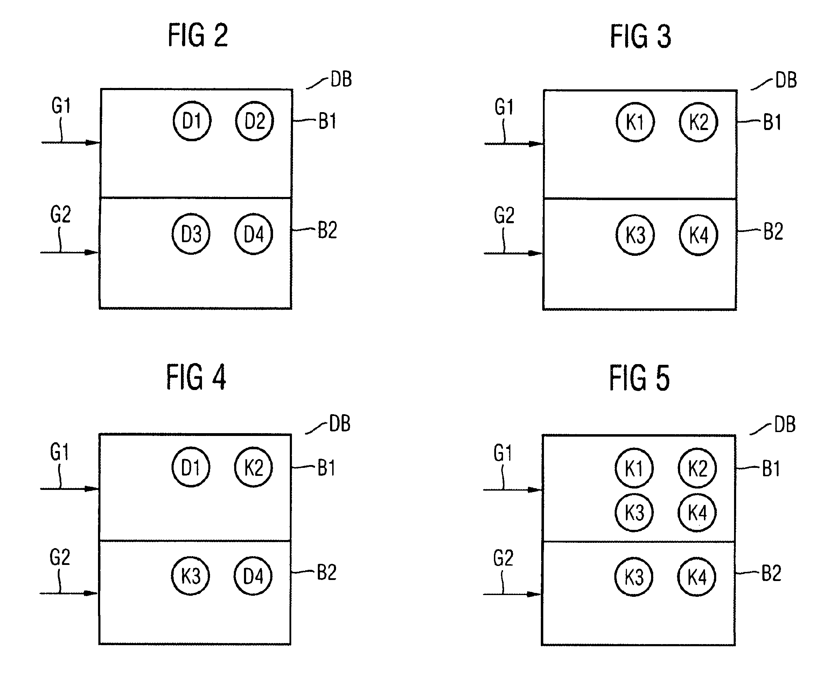

Figur 2 zeigt ein schematisches Blockschaltbild eines ersten Ausführungsbeispiels einer Datenbank DB mit verschiedenen verschlüsselten Bereichen B1, B2. Dabei ist zu einem ersten Bereich B1 der Zugang mit einem ersten Zugangs-Level L1 und damit mittels eines ersten Gruppenschlüssels G1 ermöglicht. Zu dem diesem ersten Bereich B1 untergeordneten zweiten Bereich B2 ist der Zugang mittels eines zweiten Gruppenschlüssels G2 ermöglicht. Der erste Bereich B1 speichert beispielsweise die Datensätze D1 und D2, wobei der zweite Bereich beispielsweise die Datensätze D3 und D4 speichert.

Alternativ kann - wie in Figur 3 gezeigt - der erste Bereich B1 einen ersten Datensatzschlüssel K1 für den ersten Datensatz D1 und einen zweiten Datensatzschlüssel K2 für den zweiten Datensatz D2 speichern. Ebenso kann der zweite Bereich B2 einen dritten Datensatzschlüssel K3 für den dritten Datensatz D3 und einen vierten Datensatzschlüssel K4 für den vierten Datensatz D4 speichern.

Eine Client-Vorrichtung 20, welcher der höchste Zugangs-Level L1 zugeordnet ist, kann beispielsweise mittels des ersten Gruppenschlüssels G1 auf den ersten verschlüsselten Bereich B1 zugreifen und erhält damit die beiden Datensatzschlüssel K1 und K2 für den ersten und zweiten Datensatz D1, D2. Ferner ist es dieser Client-Vorrichtung 20 mit dem höchsten Zugangs-Level L1 auch ermöglicht, auf den zweiten Bereich D2 zuzugreifen. Hier bestehen beispielsweise die Möglichkeiten, dieser Client-Vorrichtung 20 mit dem höchsten Zugangs-Level L1 den zweiten Gruppenschlüssel G2 bereitzustellen oder den zweiten Gruppenschlüssel G2 in dem ersten Bereich B1 zu speichern (nicht gezeigt).

Figur 4 zeigt ein schematisches Blockschaltbild eines dritten Ausführungsbeispiels einer Datenbank DB mit verschiedenen verschlüsselten Bereichen B1 und B2. Dabei stellt das Ausführungsbeispiel nach Figur 4 eine Mischform der Ausführungsbeispiele nach den Figuren 2 und 3 dar, wobei der jeweilige Bereich B1, B2 sowohl einen Datensatz D1 bzw. D4 als auch einen Datensatzschlüssel K2 bzw. K3 speichert und bereitstellt.

In Figur 5 ist ein schematisches Blockschaltbild eines vierten Ausführungsbeispiels einer Datenbank DB mit verschiedenen verschlüsselten Bereichen B1, B2 dargestellt. Dabei zeigt dieses vierte Ausführungsbeispiel der Datenbank DB die Möglichkeit, dass der jeweilige verschlüsselte Bereich, beispielsweise der erste Bereich B1, die Datensatzschlüssel K1, K2 zu den für diesen ersten Bereich B1 klassifizierten Datensätzen D1 und D2 und zusätzlich die Datensatzschlüssel K3, K4 zu den für die dem ersten Bereich B1 untergeordneten Bereich B2 klassifizierten Datensätzen D3, D4 speichert.

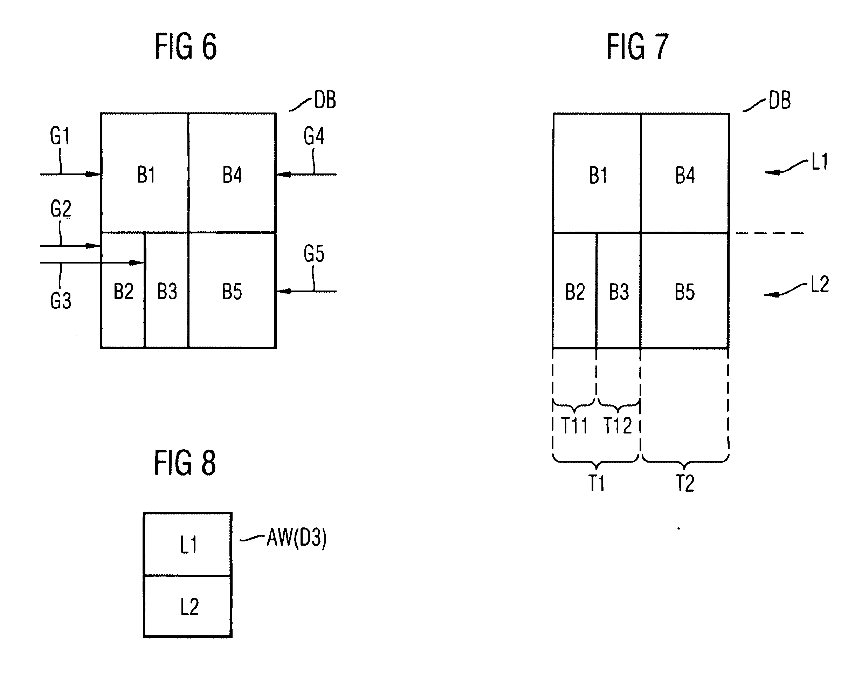

Figur 6 zeigt.ein schematisches Blockschaltbild eines fünften Ausführungsbeispiels einer Datenbank DB mit verschiedenen verschlüsselten Bereichen B1-B5. Die Datenbank DB nach Figur 6 ist in eine Mehrzahl von Bereichen B1-B5 horizontal und vertikal hierarchisch geordnet. Dabei haben der erste Bereich B1 und der vierte Bereich B4 den höheren Zugangs-Level L1 und die Bereiche B2, B3 und B5 den niedrigeren Zugangs-Level L2. Beispielsweise ist einer mit dem ersten Gruppenschlüssel G1 ausgestatteten Client-Vorrichtung 20 der Zugang zu dem ersten Bereich B1, dem zweiten Bereich B2 und dem dritten Bereich B3 ermöglicht. Ebenso ist einer mit dem vierten Gruppenschlüssel G4 ausgestatteten Client-Vorrichtung 20 der Zugang zu dem vierten Bereich B4 und dem fünften Bereich B5 ermöglicht.

Dazu zeigt Figur 7 die Möglichkeit, dass verschiedenen Bereichen B1, B4; B2, B3, B5 einer gemeinsamen horizontalen Ebene der Datenbank DB ein identischer Zugangs-Level L1, L2 zugewiesen wird und verschiedene Bereiche B1, B2, B3; B4, B5 einer gemeinsamen vertikalen Ebene der Datenbank DB einem identischen Themengebiet T1, T2 zugeordnet werden.

Beispielsweise sind der erste Bereich B1 und der vierte Bereich B4 in einer ersten horizontalen Ebene der Datenbank DB angeordnet. Der zweite Bereich B2, der dritte Bereich B3 und der fünfte Bereich B5 sind in einer zweiten, der ersten Ebene untergeordneten horizontalen Ebene angeordnet.

Ferner gehören die Bereiche B1-B3 zu einem ersten Themengebiet T1 und die Bereiche B4, B5 zu einem zweiten Themenbereich T2.

Wenn beispielsweise die Bereiche B1-B5 Videofilme bereitstellen, so kann das erste Themengebiet T1 das Themengebiet Comic sein und das zweite Themengebiet T2 kann beispielsweise das Themengebiet Western sein. Die beiden Zugangs-Levels L1 und L2 können beispielsweise FSK 12 und FSK 6 abbilden. Ferner sind auch Unterthemengebiete T11 und T12 beispielsweise für den zweiten Bereich B2 und den dritten Bereich B3 möglich. Dabei kann der erste Unterbereich T11 beispielsweise Märchen-Comic sein und der zweite Unterbereich T12 Tier-Comic sein.

Figur 8 zeigt ein schematisches Blockschaltbild eines Ausführungsbeispiels einer Auswahl von Zugangs-Levels L1, L2 für eine klassifizierende Client-Vorrichtung 20, mittels der die Client-Vorrichtung 20 ihre Klassifizierung des jeweiligen Datensatzes D1-D4 durchführen kann. Beispielsweise zeigt Figur 8 dabei die Auswahl AW(D3) für den dritten Datensatz D3. Gemäß Figur 8 kann die Client-Vorrichtung 20 für den dritten Datensatz D3 zwischen dem ersten Zugangs-Level L1 und dem zweiten Zugangs-Level L2 wählen. Die Folgen der Klassifizierung und der potenziellen Umschlüsselung werden mit Bezug auf Figur 9 im Detail erläutert.

Beispielsweise kann für jeden Zugangs-Level L1, L2 der Auswahl AW(D3) ein Schwellwert vorbestimmt werden. Der dritte Datensatz D3 wird vorzugsweise mit dem Zugangs-Level L1 klassifiziert, für den die durch die Client-Vorrichtungen 20 abgegebenen Stimmen ST den vorbestimmten Schwellwert erreichen. Gemäß dem Beispiel nach Figur 9 wird der dritte Datensatz D3 mittels des ersten Gruppenschlüssels G1 von dem zweiten Bereich B2 dem höheren ersten Bereich B1 zugeordnet.

Die Anzahl der Stimmen ST, die der jeweiligen Client-Vorrichtung 20 zugeordnet wird, kann in Abhängigkeit ihres jeweiligen Zugangs-Levels L1, L2 bestimmt werden.

Zusätzlich oder alternativ kann die Anzahl der Stimmen ST der jeweiligen Client-Vorrichtung 20 in Abhängigkeit ihres vorausgegangenen Abstimmungsverhaltens zugeordnet werden. Beispielsweise kann die Anzahl der einer bestimmten Client-Vorrichtung 20 bereitgestellten Stimmen ST, welche stetig ein anderes Abstimmungsverhalten als die Mehrheit der Client-Vorrichtungen 20 zeigt, verringert werden.

Ferner ist es denkbar, den Client-Vorrichtungen 20, denen der höchste Zugangs-Level L1 zugeordnet ist, ein Mittel bereitzustellen, mittels dem ein für die Auswahl AW(D3) bereitgestellter Zugangs-Level L1, L2 blockierbar ist.

Vorzugsweise wird der jeweiligen Client-Vorrichtung 20 ein Mittel bereitgestellt, mittels dem diese dazu geeignet ist, in Abhängigkeit eines der jeweiligen Client-Vorrichtung 20 zugewiesenen Vertrauens-Levels eine vorbestimmte Anzahl von Stimmen ST für die von der Client-Vorrichtung 20 getroffene Auswahl AW(D3) der bereitgestellten Zugangs-Level L1, L2 abzugeben. Die Zuweisung des Vertrauens-Levels kann in Abhängigkeit des zumindest einen Anmeldeparameters A1 bestimmt werden oder kann von dem Betreiber der Datenbank DB bestimmt werden.

In Figur 9 ist ein schematisches Blockschaltbild eines Ausführungsbeispiels der erfindungsgemäßen Vorrichtung 10 zum Verschlüsseln und Umschlüsseln bei einer verschlüsselungsbasierten Zugriffskontrolle zumindest einer Client-Vorrichtung 20 auf eine Datenbank DB abgebildet, welche in zumindest einem verschlüsselten Bereich B1, B2 zumindest einen Datensatz D1-D4 bereitstellt.

Die erfindungsgemäße Vorrichtung 10 weist ein erstes Mittel 11, ein zweites Mittel 12 und ein drittes Mittel 13 auf.

Das erste Mittel 11 ist dazu geeignet, einen bestimmten Zugangs-Level L1, L2 der jeweiligen Client-Vorrichtung 20 in Abhängigkeit von zumindest einem Anmeldeparameter A1 zuzuordnen. Ferner ist das erste Mittel 11 dazu geeignet, der jeweiligen Client-Vorrichtung 20 zumindest einen entsprechenden ersten Gruppenschlüssel G1 bereitzustellen. Dann ist der jeweiligen Client-Vorrichtung 20 in Abhängigkeit des zugeordneten Zugangs-Levels L1, L2 der Zugang zu einem mit dem ersten Gruppenschlüssel G1 verschlüsselten, ersten Bereich und allen dem ersten Bereich B1 untergeordneten Bereichen B2 der Datenbank DB ermöglicht.

Das zweite Mittel 12 ist dazu geeignet, ein jeweiliges Klassifizierungsresultat R in Abhängigkeit einer Klassifizierung des jeweiligen Datensatzes D1-D3 des jeweiligen Bereiches B1, B2 durch zumindest eine der Client-Vorrichtungen 20 denen zu diesem jeweiligen Bereich B1, B2 der Zugang ermöglicht ist, bereitzustellen. Gemäß dem Beispiel nach Figur 9 wird der dritte Datensatz D3 klassifiziert. Für diese Klassifizierung gibt die jeweilige Client-Vorrichtung 20 ihre Stimmen ST ab, welche das zweite Mittel 12 empfängt. Ohne Einschränkung der Allgemeinheit ist in Figur 9 nur eine einzige Client-Vorrichtung 20 dargestellt. Die Anzahl der Client-Vorrichtungen 20 , die einen jeweiligen Datensatz, beispielsweise den dritten Datensatz D3, klassifizieren, ist nur dadurch beschränkt, dass diese Client-Vorrichtungen 20 Zugang zu diesem jeweiligen Bereich, hier der zweite Bereich B2, haben müssen. Dies sind nach dem Beispiel gemäß Figur 9 all diejenigen Client-Vorrichtungen 20, die dem ersten Zugangs-Level L1 oder dem zweiten Zugangs-Level L2 zugeordnet sind. Damit sind dies alle Client-Vorrichtungen 20, die Zugang zur Datenbank DB haben.

Für eine Klassifizierung des ersten und zweiten Datensatzes D1, D2, die dem ersten Bereich B1 zugeordnet sind, sind allerdings nur solche Client-Vorrichtungen 20 eingerichtet, die dem ersten Zugangs-Level L1 zugeordnet sind.

In den obigen Ausführungsbeispielen ist der erste Bereich B1 jeweils der mit dem höchsten Zugangs-Level L1. Dies ist nur beispielhaft, denn der jeweilige erste Bereich ist der der jeweiligen Client-Vorrichtung 20 zugeordnete Bereich, zu dem die jeweilige Client-Vorrichtung zusätzlich zu den diesem ersten Bereich untergeordneten Bereichen Zugang hat.

## Patentansprüche

1. Verfahren zum Umschlüsseln bei einer verschlüsselungsbasierten Zugriffskontrolle zumindest einer Client-Vorrichtung (20) auf eine Datenbank (DB), welche in zumindest einem verschlüsselten Bereich (B1, B2) zumindest einen Datensatz (D1-D4) bereitstellt, mit den Schritten:
a) Zuordnen eines bestimmten Zugangs-Levels (L1, L2) der jeweiligen Client-Vorrichtung (20) und Bereitstellen zumindest eines entsprechenden ersten Gruppenschlüssels (G1) der Client-Vorrichtung (20) in Abhängigkeit von zumindest einem Anmeldeparameter (A1), wobei der Client-Vorrichtung (20) in Abhängigkeit des zugeordneten Zugangs-Levels (L1) der Zugang zu einem mit dem ersten Gruppenschlüssel (G1) verschlüsselten, ersten Bereich (B1) und allen dem ersten Bereich (B1) untergeordneten Bereichen (B2, B3) der Datenbank (DB) ermöglicht ist;
b) Klassifizieren des jeweiligen Datensatzes (D1-D4) des jeweiligen Bereiches (B1, B2) durch zumindest eine der Client-Vorrichtungen (20), denen zu diesem jeweiligen Bereich (B1, B2) der Zugang ermöglicht ist, zur Bereitstellung eines Klassifizierungs-Resultates (R), **gekennzeichnet durch** folgenden Verfahrenschritt :
c) Umschlüsseln des jeweiligen Datensatzes (D1-D4) und/oder eines Datensatz-Schlüssels (K1-K4) für den jeweiligen Datensatz (D1-D4) in Abhängigkeit des jeweiligen Klassifizierungs-Resultates (R).

2. Verfahren nach Anspruch 1,
**dadurch gekennzeichnet,**
**dass** der jeweilige verschlüsselte Bereich (B1, B2) zumindest einen für diesen Bereich (B1, B2) klassifizierten Datensatz (D1-D4) und/oder zumindest einen Datensatzschlüssel (K1-K4) zu dem jeweiligen zumindest einen für diesen Bereich (B1, B2) klassifizierten Datensatz (D1-D4) speichert.

3. Verfahren nach Anspruch 2,
**dadurch gekennzeichnet,**
**dass** der jeweilige verschlüsselte Bereich (B1) die Datensatzschlüssel (K1, K2) zu den für diesen Bereich (B1) klassifizierten Datensätze (D1, D2) und die Datensatzschlüssel (K3, K4) zu den für die diesem Bereich (B1) untergeordneten Bereiche (B2) klassifizierten Datensätze (D3, D4) speichert.

4. Verfahren nach Anspruch 1, 2 oder 3,
**dadurch gekennzeichnet,**
**dass** die Datenbank (DB) in eine Mehrzahl von Bereichen (B1-B5) horizontal und/oder vertikal hierarchisch geordnet wird, wobei der Client-Vorrichtung (20) in Abhängigkeit des zugeordneten Zugangs-Levels (L1) der Zugang zu dem ersten Bereich (B1) und allen dem ersten Bereich (B1) vertikal zugeordneten und horizontal untergeordneten Bereichen (B2, B3) ermöglicht ist.

5. Verfahren nach Anspruch 1 oder einem der Ansprüche 2 bis 4,
**dadurch gekennzeichnet,**
**dass** mittels des bereitgestellten Klassifizierungs-Resultates (R) der Bereich (B1), dem der klassifizierte Datensatz (D3) zuzuordnen ist, und der entsprechende Gruppenschlüssel (G1) bestimmt werden, mittels dem der jeweilige Datensatz (D3) und/oder der Datensatzschlüssel (K3) des jeweiligen Datensatzes (D3) umgeschlüsselt wird.

6. Verfahren nach Anspruch 1 oder einem der Ansprüche 2 bis 5,
**dadurch gekennzeichnet,**
**dass** der Client-Vorrichtung (20) neben dem ersten Gruppenschlüssel (G1) für den ersten Bereich (B1) alle Gruppenschlüssel (G2, G3) der dem ersten Bereich (B1) untergeordneten Bereiche (B2, B3) bereitgestellt werden.

7. Verfahren nach Anspruch 1 oder einem der Ansprüche 2 bis 5,
**dadurch gekennzeichnet,**
**dass** der erste Bereich (B1) alle Gruppenschlüssel (G2, G3) der dem ersten Bereich (B1) untergeordneten Bereiche (B2, B3) speichert.

8. Verfahren nach Anspruch 1 oder einem der Ansprüche 2 bis 7,
**dadurch gekennzeichnet,**
**dass** der jeweilige Datensatz (D3) und/oder der Datensatzschlüssel (K3) zu dem jeweiligen Datensatz (D3) mittels eines durch das Klassifizierungs-Resultat (R) bestimmten Gruppenschlüssels (G1) umgeschlüsselt werden/wird.

9. Verfahren nach Anspruch 1 oder einem der Ansprüche 2 bis 8,
**dadurch gekennzeichnet,**
**dass** der zumindest eine Anmeldeparameter (A1) ein Alter des Nutzers der Client-Vorrichtung (20), seinen Namen, seinen von einem Betreiber der Datenbank (DB) zugewiesenen Status und/oder seine Stellung innerhalb eines die Datenbank (DB) betreibenden oder unterhaltenden Unternehmens umfasst.

10. Verfahren nach Anspruch 4 oder einem der Ansprüchen 5 bis 9,
**dadurch gekennzeichnet,**
**dass** verschiedene Bereiche (B1, B4; B2, B3, B5) einer gemeinsamen horizontalen Ebene der Datenbank (DB) einem identischen Zugangs-Level (L1; L2) zugewiesen werden und/oder verschiedene Bereiche (B1, B2, B3; B4, B5) einer gemeinsamen vertikalen Ebene der Datenbank (DB) einem identischen Themengebiet (T1, T2) zugeordnet werden.

11. Verfahren nach Anspruch 1 oder einem der Ansprüche 2 bis 10,
**dadurch gekennzeichnet,**
**dass** einem jeweiligen Datensatz (D1, D2; D3, D4) ein bestimmtes Zugangs-Level (L1; L2) und damit ein bestimmter Bereich (B1; B2) zugeordnet wird, wobei den Client-Vorrichtungen (20), denen zu diesem jeweiligen Bereich (B1; B2) der Zugang ermöglicht ist, eine Auswahl (AW(D3)) von Zugangs-Leveln (L1; L2) für das Klassifizieren bereitgestellt wird.

12. Verfahren nach Anspruch 11,
**dadurch gekennzeichnet,**
**dass** der jeweiligen Client-Vorrichtung (20) ein Mittel bereitgestellt wird, mittels dem diese dazu geeignet ist, in Abhängigkeit eines der jeweiligen Client-Vorrichtung (20) zugewiesenen Vertrauens-Levels eine vorbestimmte Anzahl von Stimmen (ST) für die von der Client-Vorrichtung (20) getroffene Auswahl (AW(D3)) der bereitgestellten Zugangs-Level (L1, L2) abzugeben.

13. Verfahren nach Anspruch 11 oder 12,
**dadurch gekennzeichnet,**
**dass** für jeden der Auswahl (AW(D3)) der Zugangs-Level (L1, L2) ein Schwellwert vorbestimmt wird, wobei der jeweilige Datensatz (D3) mit dem Zugangs-Level (L1) klassifiziert wird, für den die durch die Client-Vorrichtungen (20) abgegebenen Stimmen (ST) den vorbestimmten Schwellwert erreichen.

14. Verfahren nach Anspruch 11, 12 oder 13,
**dadurch gekennzeichnet,**
**dass** die Anzahl der Stimmen (ST) der jeweiligen Client-Vorrichtungen (20) in Abhängigkeit ihres jeweiligen Zugangs-Levels (L1, L2) zugeordnet wird.

15. Verfahren nach Anspruch 11 oder einem der Ansprüche 12 bis 14,
**dadurch gekennzeichnet,**
**dass** die Anzahl der Stimmen (ST) der jeweiligen Client-Vorrichtung (20) in Abhängigkeit ihres vorausgegangen Abstimmungsverhaltens zugeordnet wird.

16. Verfahren nach Anspruch 11 oder einem der Ansprüche 12 bis 15,
**dadurch gekennzeichnet,**
**dass** die Client-Vorrichtungen (20), denen der höchste Zugangs-Level (L1) zugeordnet ist, mit einem Mittel ausgestattet werden, mittels dem ein für die Auswahl (AW(D3)) bereitgestellter Zugangs-Level (L1; L2) blockierbar ist.

17. Verfahren nach Anspruch 1 oder einem der Ansprüche 2-16, **dadurch gekennzeichnet,**
**dass** der Datensatz (D1-D4) dynamische Daten aufweist, welche dazu geeignet sind, als kontinuierlicher Datenstrom von der Datenbank (DB) zu der jeweiligen Client-Vorrichtung (20) übertragen zu werden.

18. Computerprogramm-Produkt, welches auf einer programmgesteuerten Einrichtung die Durchführung eines Verfahrens nach Anspruch 1 oder einem der Ansprüche 2-17 veranlasst.

19. Vorrichtung (10) zum Umschlüsseln bei einer verschlüsselungsbasierten Zugriffskontrolle zumindest einer Client-Vorrichtung auf eine Datenbank, welche in zumindest einem verschlüsselten Bereich zumindest einen Datensatz bereitstellt, mit:
a) einem ersten Mittel (11) zum Zuordnen eines bestimmten Zugangs-Levels (L1, L2) der jeweiligen Client-Vorrichtung (20) und zum Bereitstellen zumindest eines entsprechenden ersten Gruppenschlüssels (G1) der Client-Vorrichtung (20) in Abhängigkeit von zumindest einem Anmeldeparameter (A1), wobei der Client-Vorrichtung (20) in Abhängigkeit des zugeordneten Zugangs-Levels (L1) der Zugang zu einem mit dem ersten Gruppenschlüssel (G1) verschlüsselten, ersten Bereich (B1) und allen dem ersten Bereich (B1) untergeordneten Bereichen (B2, B3) der Datenbank (DB) ermöglicht ist;
b) einem zweiten Mittel (12) zum Bereitstellen eines Klassifizierungs-Resultates in Abhängigkeit einer Klassifizierung des jeweiligen Datensatzes des jeweiligen Bereiches durch zumindest eine der Client-Vorrichtungen, denen zu diesem jeweiligen Bereich der Zugang ermöglicht ist; **gekennzeichnet durch**
c) ein drittes Mittel (13) zum Umschlüsseln des jeweiligen Datensatzes und/oder eines Datensatz-Schlüssels für den jeweiligen Datensatz in Abhängigkeit des jeweiligen Klassifizierungs-Resultates.

20. Vorrichtung nach Anspruch 19,
**dadurch gekennzeichnet,**
**dass** die Vorrichtung (10) in einer Client-Server-Architektur angeordnet ist.

21. Vorrichtung nach Anspruch 19,
**dadurch gekennzeichnet,**
**dass** die Vorrichtung (10) in einer dezentralen Architektur oder in einem Peer-to-Peer-Netzwerk angeordnet ist.

22. Vorrichtung nach Anspruch 19 bis 21,
**dadurch gekennzeichnet,**
**dass** die Vorrichtung (10) zwischen der Client-Vorrichtung (20) und der Datenbank (DB) angeordnet ist.

## Claims

1. Method for transcoding in encryption-based access control of at least one client device (20) to a database (DB) which provides at least one dataset (D1-D4) in at least one encrypted area (B1, B2), the method comprising the steps:
a) assigning a specific access level (L1, L2) to the respective client device (20) and providing at least one corresponding first group key (G1) to the client device (20) as a function of at least one registration parameter (A1), with the client device (20) being allowed access to a first area (B1) encrypted using the first group key (G1) and all areas (B2, B3) of the database (DB) that are subordinate to the first area (B1) as a function of the assigned access level (L1);
b) classifying the respective dataset (D1-D4) of the respective area (B1, B2) by at least one of the client devices (20) which is allowed access to said respective area, in order to provide a classification result (R), **characterised by** the following method step:
c) transcoding the respective dataset (D1-D4) and/or a dataset key (K1-K4) for the respective dataset (D1-D4) as a function of the respective classification result (R).

2. Method according to claim 1,
**characterised in that**
the respective encrypted area (B1, B2) stores at least one dataset (D1-D4) classified for said area (B1, B2) and/or at least one dataset key (K1-K4) associated with the respective at least one dataset (D1-D4) classified for said area (B1, B2).

3. Method according to claim 2,
**characterised in that**
the respective encrypted area (B1) stores the dataset key (K1, K2) associated with the datasets (D1, D2) classified for said area (B1) and the dataset keys (K3, K4) associated with the datasets (D3, D4) classified for the areas (B2) subordinate to said area (B2).

4. Method according to claim 1, 2 or 3,
**characterised in that**
the database (DB) is hierarchically organised horizontally and/or vertically into a plurality of areas (B1-B5), with the client device (20) being allowed access to the first area (B1) and all areas (B2, B3) vertically assigned and horizontally subordinate to the first area (B1) as a function of the assigned access level (L1).

5. Method according to claim 1 or one of claims 2 to 4,
**characterised in that**
the provided classification result (R) is used to determine the area (B1) to which the classified dataset (D3) is to be assigned and the corresponding group key (G1) by means of which the respective dataset (D3) and/or the dataset key (K3) of the respective dataset (D3) are/is transcoded.

6. Method according to claim 1 or one of claims 2 to 5,
**characterised in that**
in addition to the first group key (G1) for the first area (B1) the client device (20) is also provided with all the group keys (G2, G3) of the areas (B2, B3) subordinate to the first area (B1).

7. Method according to claim 1 or one of claims 2 to 5,
**characterised in that**
the first area (B1) stores all the group keys (G2, G3) of the areas (B2, B3) that are subordinate to the first area (B2).

8. Method according to claim 1 or one of claims 2 to 7,
**characterised in that**
the respective dataset (D3) and/or the dataset key (K3) associated with the respective dataset (D3) are/is transcoded using a group key (G1) determined by means of the classification result (R).

9. Method according to claim 1 or one of claims 2 to 8,
**characterised in that**
the at least one registration parameter (A1) includes the age of the user of the client device (20), his/her name, the status assigned to him/her by an operator of the database (DB), and/or his/her position within an organisation operating or maintaining the database (DB).

10. Method according to claim 4 or one of claims 5 to 9,
**characterised in that**
different areas (B1, B4; B2, B3, B5) of a common horizontal level of the database (DB) are assigned to an identical access level (L1; L2) and/or different areas (B1, B2, B3; B4, B5) of a common vertical level of the database (DB) are assigned to an identical subject area (T1, T2).

11. Method according to claim 1 or one of claims 2 to 10,
**characterised in that**
a respective dataset (D1, D2; D3, D4) is assigned a specific access level (L1; L2) and consequently a specific area (B1; B2), with the client devices (20) which are allowed access to said respective area (B1; B2) being provided with a selection (AW(D3)) of access levels (L1; L2) for classification purposes.

12. Method according to claim 11,
**characterised in that**
the respective client device (20) is provided with a means with the aid of which said device is suitable for casting a predetermined number of votes (ST) for the selection (AW(D3)) of the provided access levels (L1, L2) made by the client device (20) as a function of a trust level assigned to the respective client device (20).

13. Method according to claim 11 or 12,
**characterised in that**
a threshold value is predetermined for each of the selection (AW(D3)) of the access levels (L1, L2), with the respective dataset (D3) being classified with the access level (L1) for which the votes (ST) cast by the client devices (20) reach the predetermined threshold value.

14. Method according to claim 11, 12 or 13,
**characterised in that**
the number of votes (ST) of the respective client devices (20) are assigned as a function of their respective access level (L1, L2).

15. Method according to claim 11 or one of claims 12 to 14,
**characterised in that** the number of votes (ST) of the respective client device (20) are assigned as a function of its previous voting behaviour.

16. Method according to claim 11 or one of claims 12 to 15,
**characterised in that**
the client devices (20) to which the highest access level (L1) is assigned are equipped with a means with the aid of which an access level (L1; L2) provided for the selection (AW(D3)) can be blocked.

17. Method according to claim 1 or one of claims 2 to 16,
**characterised in that**
the dataset (D1-D4) has dynamic data which is suitable for being transmitted as a continuous data stream from the database (DB) to the respective client device (20).

18. Computer program product which initiates the performance of a method according to claim 1 or one of claims 2 to 17 on a program-controlled appliance.

19. Device (10) for transcoding in encryption-based access control of at least one client device to a database which provides at least one dataset in at least one encrypted area, comprising:
a) a first means (11) for assigning a specific access level (L1, L2) to the respective client device (20) and for providing at least one corresponding first group key (G1) to the client device (20) as a function of at least one registration parameter (A1), with the client device (20) being allowed access to a first area (B1) encrypted using the first group key (G1) and all areas (B2, B3) of the database (DB) that are subordinate to the first area (B1) as a function of the assigned access level (L1);
b) a second means (12) for providing a classification result as a function of a classification of the respective dataset of the respective area by at least one of the client devices which is allowed access to said respective area,
**characterised by**
c) a third means (13) for transcoding the respective dataset and/or a dataset key for the respective dataset as a function of the respective classification result.

20. Device according to claim 19,
**characterised in that**
the device (10) is arranged in a client-server architecture.

21. Device according to claim 19,
**characterised in that**
the device (10) is arranged in a decentralised architecture or in a peer-to-peer network.

22. Device according to claim 19 to 21,
**characterised in that**
the device (10) is arranged between the client device (20) and the database (DB).

## Revendications

1. Procédé de déchiffrement dans le cas d'un contrôle d'accès, fondé sur le chiffrement, d'au moins un dispositif client (20) à une banque de données (DB) qui met à disposition, dans au moins une zone chiffrée (B1, B2), au moins un ensemble de données (D1, D4), comprenant les étampes :
a) attribution d'un niveau d'accès déterminé (L1, L2) au dispositif client respectif (20) et mise à disposition d'au moins une première clé de groupe correspondante (G1) au dispositif client (20) en fonction d'au moins un paramètre de notification (A1), l'accès à une première zone (B1) chiffrée à l'aide de la première clé de groupe (G1) et à toutes les zones (B2, B3) de la banque de données (DB) subordonnées à la première zone (B1) étant permis au dispositif client (20) en fonction du niveau d'accès (L1) attribué ;
b) classification de l'ensemble de données respectif (D1-D4) de la zone respective (B1, B2) par au moins un des dispositifs clients (20) auxquels l'accès à cette zone respective (B1, B2) est permis, pour fournir un résultat de classification (R),
**caractérisé par** l'étape de procédé suivante :
c) déchiffrement de l'ensemble de données respectif (D1-D4) et/ou d'une clé d'ensemble de données (K1-K4) pour l'ensemble de données respectif (D1-D4) en fonction du résultat de classification respectif (R).

2. Procédé selon la revendication 1,
**caractérisé en ce que** la zone chiffrée respective (B1, B2) contient en mémoire au moins un ensemble de données (D1-D4) classifié pour cette zone (B1, B2) et/ou au moins une clé d'ensemble de données (K1-K4) relative à l'au moins un ensemble de données respectif (D1-D4) classifié pour cette zone (B1, B2).

3. Procédé selon la revendication 2, **caractérisé en ce que** la zone chiffrée respective (B1) contient en mémoire les clés d'ensemble de données (K1, K2) relatives aux ensembles de données (D1, D2) classifiés pour cette zone (B1) et les clés d'ensemble de données (K3, K4) relatives aux ensembles de données (D3, D4) classifiés pour les zones (B2) subordonnées à cette zone (B2).

4. Procédé selon la revendication 1, 2 ou 3, **caractérisé en ce que** la banque de données (DB) est organisée en une pluralité de zones (B1-B5) qui répondent à un ordonnancement hiérarchique horizontal et/ou vertical, l'accès à la première zone (B1) et à toutes les zones (B2, B3) associées verticalement et subordonnées horizontalement à la première zone (B1) étant permis au dispositif client (20) en fonction du niveau d'accès (L1) attribué.

5. Procédé selon la revendication 1 ou l'une des revendications 2 à 4, **caractérisé en ce que** l'on détermine, au moyen du résultat de classification (R) fourni, la zone (B1) à laquelle l'ensemble de données (D3) classifié doit être associé et la clé de groupe (G1) correspondante à l'aide de laquelle l'ensemble de données respectif (D3) et/ou la clé d'ensemble de données (K3) de l'ensemble de données respectif (D3) est/sont déchiffré/s.

6. Procédé selon la revendication 1 ou l'une des revendications 2 à 5, **caractérisé en ce que**, en plus de la première clé de groupe (G1) pour la première zone (B1), toutes les clés de groupe (G2, G3) des zones (B2, B3) subordonnées à la première zone (B1) sont mises à disposition du dispositif client (20).

7. Procédé selon la revendication 1 ou l'une des revendications 2 à 5, **caractérisé en ce que** la première zone (B1) contient en mémoire toutes les clés de groupe (G2, G3) des zones (B2, B3) subordonnées à la première zone (B2).

8. Procédé selon la revendication 1 ou l'une des revendications 2 à 7, **caractérisé en ce que** l'ensemble de données respectif (D3) et/ou la clé d'ensemble de données (K3) relative à l'ensemble de données respectif (D3) est/sont déchiffré/s à l'aide d'une clé de groupe (G1) déterminée par le résultat de classification (R).

9. Procédé selon la revendication 1 ou l'une des revendications 2 à 8, **caractérisé en ce que** l'au moins un paramètre de notification (A1) comprend l'âge de l'utilisateur du dispositif client (20), son nom, son statut octroyé par un exploitant de la banque de données (DB) et/ou sa position à l'intérieur d'une société exploitant ou maintenant la banque de données (DB).

10. Procédé selon la revendication 4 ou l'une des revendications 5 à 9, **caractérisé en ce que** différentes zones (B1, B4 ; B2, B3, B5) d'un niveau horizontal commun de la banque de données (DB) sont affectées à un niveau d'accès identique (L1; L2) et/ou différentes zones (B1, B2, B3; B4, B5) d'un plan vertical commun de la banque de données (DB) sont associées à un domaine thématique identique (T1, T2).

11. Procédé selon la revendication 1 ou l'une des revendications 2 à 10, **caractérisé en ce qu'**un niveau d'accès (L1; L2) déterminé, et donc une zone déterminée (B1; B2), est associé à un ensemble de données respectif (D1, D2; D3, D4), une sélection (AW(D3) de niveaux d'accès (L1; L2) étant mise à la disposition des dispositifs clients (20) auxquels l'accès à cette zone respective (B1; B2) est permis, pour la classification.

12. Procédé selon la revendication 11, **caractérisé en ce qu'**un moyen est fourni au dispositif client respectif (20), moyen qui confère au dispositif client la faculté de donner un nombre prédéterminé de voix (ST) pour la sélection (AW(D3)) des niveaux d'accès proposés (L1, L2) opérée par le dispositif client (20) en fonction d'un niveau de confiance attribué au dispositif client respectif (20).

13. Procédé selon la revendication 11 ou 12, **caractérisé en ce qu'**une valeur seuil est prédéterminée pour chaque sélection (AW(D3) des niveaux d'accès (L1, L2), l'ensemble de données respectif (D3) qui présente le niveau d'accès (L1) pour lequel les voix (ST) données par les dispositifs clients (20) atteignent la valeur seuil prédéterminée étant classifié.

14. Procédé selon la revendication 11, 12 ou 13, **caractérisé en ce que** le nombre de voix (ST) des dispositifs clients respectifs (20) est attribué en fonction de leur niveau d'accès respectif (L1, L2).

15. Procédé selon la revendication 11 ou l'une des revendications 12 à 14, **caractérisé en ce que** le nombre des voix (ST) du dispositif client respectif (20) est attribué en fonction de son comportement antérieur en matière de vote.

16. Procédé selon la revendication 11 ou l'une des revendications 12 à 15, **caractérisé en ce que** les dispositifs clients (20) auxquels est attribué le niveau d'accès le plus élevé (L1) sont dotés d'un moyen qui permet de bloquer un niveau d'accès (L1; L2) fourni pour la sélection (AW(D3)).

17. Procédé selon la revendication 1 ou l'une des revendications 2-16, **caractérisé en ce que** l'ensemble de données (D1-D4) comprend des données dynamiques qui sont adaptées pour être transmises en tant que flux de données continu de la banque de données (DB) vers le dispositif client respectif (20).

18. Produit de programme informatique qui lance l'exécution d'un procédé selon la revendication 1 ou l'une des revendications 2-17 sur un dispositif commandé par programme.

19. Dispositif (10) de déchiffrement dans le cas d'un contrôle d'accès, fondé sur le chiffrement, d'au moins un dispositif client à une banque de données qui met à disposition, dans au moins une zone chiffrée, au moins un ensemble de données, comprenant :
a) un premier moyen (11) pour l'attribution d'un niveau d'accès déterminé (L1, L2) au dispositif client respectif (20) et la mise à disposition d'au moins une première clé de groupe correspondante (G1) au dispositif client (20) en fonction d'au moins un paramètre de notification (A1), l'accès à une première zone (B1) chiffrée à l'aide de la première clé de groupe (G1) et à toutes les zones (B2, B3) de la banque de données (DB) subordonnées à la première zone (B1) étant permis au dispositif client (20) en fonction du niveau d'accès (L1) attribué ;
b) un deuxième moyen (12) pour la fourniture d'un résultat de classification en fonction d'une classification de l'ensemble de données respectif de la zone respective par au moins un des dispositifs clients auxquels l'accès à cette zone respective est permis ;
**caractérisé par**
c) un troisième moyen (13) pour le déchiffrement de l'ensemble de données respectif et/ou d'une clé d'ensemble de données pour l'ensemble de données respectif en fonction du résultat de classification respectif.

20. Dispositif selon la revendication 19, **caractérisé en ce que** le dispositif (10) est placé dans une architecture client-serveur.

21. Dispositif selon la revendication 19, **caractérisé en ce que** le dispositif (10) est placé dans une architecture décentralisée ou dans un réseau pair à pair.

22. Dispositif selon les revendications 19 à 21, **caractérisé en ce que** le dispositif (10) est placé entre le dispositif client (20) et la banque de données (DB).
